# FASCICULE DE BREVET EUROPEEN

(11) **EP 1 491 122 B1**
(45) Date de publication et mention de la délivrance du brevet: **14.05.2008**
(21) Numéro de dépôt: 04291553.8
(22) Date de dépôt: 18.06.2004
(51) Int. Cl.: A47J 37/06

(54) **Appareil électroménager**
Elektrisches Haushaltsgerät
Electrical household appliance

(30) Priorité: 26.06.2003 FR 0307742
(43) Date de publication de la demande: 29.12.2004
(73) Titulaire: SEB SA, 69130 Ecully (FR)
(72) Inventeur: Lubowicki, Jean-Pierre, 74540 Gruffy (FR); Gruaz, Denis, 74370 Villaz (FR)
(74) Mandataire: Pichat, Thierry

(56) Documents cités:
- US-A- 4 803 918
- US-A- 5 937 742

## Description

La présente invention concerne un appareil électroménager du type composé par un support et un dispositif du type gaufrier monté pivotant sur ce support.

On connaît un appareil électroménager du type comportant, d'une part, un support, et, d'autre part, un dispositif du type gaufrier qui comprend un panneau supérieur et un panneau inférieur articulés entre eux par une charnière entre une position ouverte et une position fermée, qui est monté pivotant sur le support autour d'un axe de pivotement entre au moins une position angulaire de manoeuvre dans laquelle l'axe de la charnière est orientée horizontalement, le panneau supérieur étant au-dessus du panneau inférieur, et une seconde position angulaire retournée dans laquelle l'axe de la charnière est orientée horizontalement, le panneau supérieur étant au-dessous du panneau inférieur.

Un tel appareil est décrit dans le brevet US 2 116 688 dans lequel le dispositif comprend en outre un panneau central de façon à former un double gaufrier, le panneau supérieur et la panneau inférieur comprenant, chacun, une poignée de préhension reliée au panneau correspondant par un demi-arbre s'étendant selon l'axe de pivotement quand le dispositif est en position fermée, les deux demi-arbres formant un arbre de rotation quand le dispositif est en position fermée.

D'autres appareils similaires sont connus des documents US 4803918 A et US 5937742 A.

Toutefois, dans un tel appareil électroménager, la répartition de la pâte à gaufre dans le gaufrier est difficilement homogène : quand le gaufrier est rempli de pâte à gaufre, le gonflement de celle-ci entraîne l'écartement des panneaux, et donc la pâte tend à ne pas se répartir uniformément à la surface des panneaux mais à gonfler avec une importante composante dans le sens de l'ouverture des panneaux. Il est plausible que, dans l'appareil décrit dans US 2 116 688, le panneau central ne s'écarte pas du panneau qui disposé sous lui (le panneau inférieur en position de manoeuvre ou le panneau supérieur en position retournée) du fait du poids du panneau central et de celui de panneau qui est situé au-dessus de ce dernier, mais, quoi qu'il en soit, il y a toujours un écartement entre le panneau central et le panneau qui est situé au-dessus de lui. Par ailleurs, pour un dispositif avec seulement deux panneaux, le poids d'un seul panneau est insuffisant pour empêcher l'écartement des panneaux. Cet écartement des panneaux conduit immanquablement à une déperdition de pâte en dehors de l'appareil et à des gaufres peu gonflées.

Le problème posé est de réaliser un appareil électroménager du type précité de construction simple, dont la conformation des différents éléments constitutifs permet une répartition homogène de la pâte entre les panneaux en position.

La solution proposée par la présente invention est un appareil comme défini dans la revendication 1, comprenant un dispositif de verrouillage libérable agissant sur le mouvement relatif des panneaux supérieur et inférieur pour autoriser le libre de mouvement du panneau supérieur par rapport au panneau inférieur quand le dispositif est dans sa position de manoeuvre, et verrouiller dans sa position fermée le panneau supérieur vis-à-vis du panneau inférieur quand le dispositif est dans sa position retournée.

Ainsi, par cette configuration, une fois la pâte disposée sur le panneau inférieur, le dispositif étant ouvert dans sa position de manoeuvre, le panneau supérieur est abaissé de façon à fermer le dispositif, et ensuite, le dispositif est pivoté jusqu'à sa position retournée dans laquelle il est verrouillé en position fermée. Selon l'invention, le verrouillage des deux panneaux en position fermée quand le dispositif est dans sa position retournée permet une bonne répartition de la pâte.

Le dispositif de verrouillage comporte un élément de verrouillage solidaire du panneau supérieur, un pivot solidaire du panneau inférieur, s'étendant selon l'axe de pivotement, à l'opposé de la charnière, et comprenant un logement adapté à recevoir l'élément de verrouillage quand les deux panneaux sont en position fermée, et un palier porté par le support, dans lequel le pivot est monté pivotant, et comprenant une ouverture qui est disposée de façon à permettre le passage de l'élément de verrouillage pour l'ouverture et la fermeture du dispositif quand le dispositif est dans sa position de manoeuvre, le palier étant conformé de façon à empêcher l'ouverture des panneaux quand le dispositif est dans sa position retournée.

Ainsi, selon cette configuration, quand le dispositif en position de manoeuvre est fermé, l'élément de verrouillage est disposé dans le logement après avoir traversé l'ouverture du palier, et quand le dispositif est pivoté, le pivot et l'élément de verrouillage pivotent dans le palier. Le pivot est emprisonné dans le palier étant donné que celui-ci s'étend sur plus d'un demi-tour, et dès que le pivot et l'élément de verrouillage ont pivoté d'un angle suffisant pour que l'élément de verrouillage (disposé dans le logement du pivot) ne se trouve plus intégralement en face de l'ouverture du palier, l'élément de verrouillage est lui aussi emprisonné dans le palier. Ainsi, le verrouillage des deux panneaux est réalisé automatiquement dès qu le dispositif a subit un pivotement d'un angle suffisant prédéterminé.

D'autres avantages et particularités apparaîtront dans la description du mode de réalisation qui est illustré par les dessins mis en annexe et qui n'est donné qu'à titre d'exemple non limitatif.
La figure 1 est une vue en perspective d'un appareil électroménager conforme à la présente invention, le dispositif tant fermé en position de manoeuvre ; et
La figure 2 est un agrandissement de la zone II de la figure 1 ;
La figure 3 est une vue en coupe simplifiée perpendiculaire à l'axe de pivotement de la coopération du palier, du pivot et de l'élément de verrouillage selon un premier mode de réalisation de la présente invention ; et
La figure 4 est une vue similaire à la figure 3 selon un second mode de réalisation.

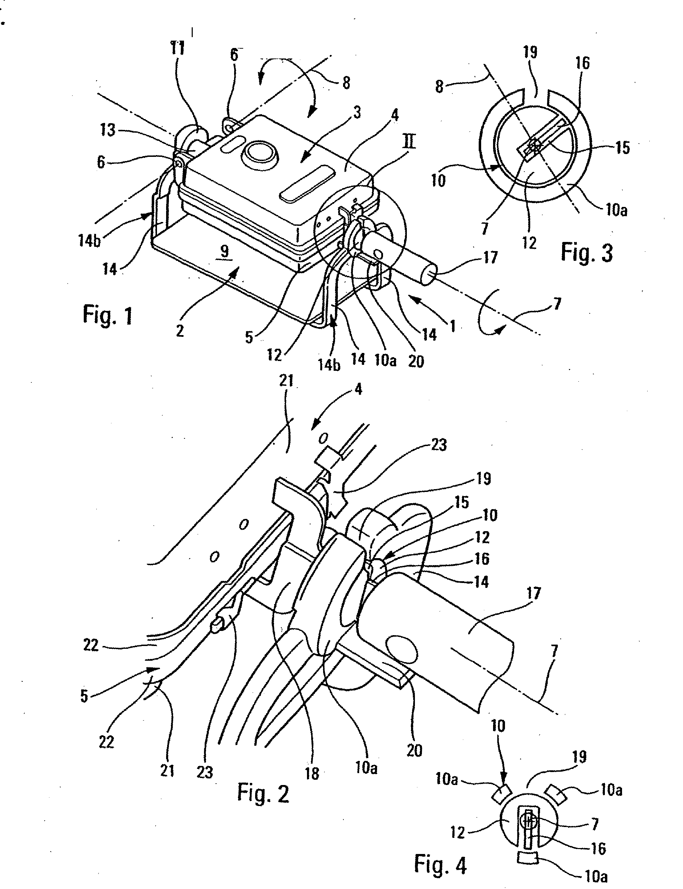

Comme on peut le voir à la figure 1, un appareil électroménager 1 comporte un support 2 et un dispositif 3 du type gaufrier.

Le gaufrier 3 comprend deux panneaux 4,5 qui sont articulés entre eux par une charnière 6 entre une position ouverte et une position fermée. Le gaufrier 3 est monté pivotant sur le support 2 autour d'un axe de pivotement 7 entre au moins une position angulaire de manoeuvre dans laquelle l'axe 8 de la charnière 6 est orienté horizontalement et dans laquelle le panneau supérieur 4 est au-dessus du panneau inférieur 5 quand ils sont en position fermée (figures 1 et 2), et une seconde position angulaire retournée dans laquelle l'axe 8 de la charnière 6 est orienté horizontalement, le panneau supérieur 4 étant au-dessous du panneau inférieur 5 quand ils sont en position fermée. L'axe 8 de la charnière 6 est perpendiculaire à l'axe de pivotement 7. Entre les deux positions de manoeuvre et retournée, il y a un décalage d'un demi-tour.

De façon classique, chaque panneau 4,5 comprend une coquille 21 qui forme le corps du panneau correspondant, une plaque de cuisson 22 qui est portée par la coquille correspondante et qui est adaptée à recevoir la nourriture à cuire, et une résistance électrique qui est destinée à chauffer la plaque de cuisson 22. Dans le présent exemple, chaque plaque de cuisson 22 est reliée de façon amovible à la coquille 21 correspondante par un mécanisme d'encliquetage 23.

Avantageusement, le support 2 comprend un premier et un deuxième appuis 14a, 14b dressés depuis un socle inférieur 9 et sur lesquels le dispositif gaufrier 3 est monté pivotant, à deux extrémités opposées

Astucieusement, ce dispositif gaufrier comprend une unique poignée 17 située au bout d'un bras (appelé aussi lame) 16 relié(e) au panneau supérieur 4 et s'étendant à une seulement desdites extrémités, à l'opposé de la charnière 6 située sur le premier appui 14a. Le bras 16 s'étend en direction du deuxième appui 14b lorsque le dispositif est en position de manoeuvre ou en position retournée, pour reposer sur lui dans ces deux positions. Par ailleurs, le dispositif de verrouillage libérable engage le bras 16 dans ladite position retournée et le dégage en position de manoeuvre, pour autoriser alors la libre articulation entre eux des panneaux supérieur et inférieur, 4,5 à l'endroit de la charnière 6.

Il est également à noter que le panneau inférieur 5 est quant à lui relié à un bras (ou lame) 18 s'étendant le long du premier bras 16, ceci tant en position de manoeuvre qu'en position retournée du dispositif gaufrier, lesdits bras 16,18 s'appuyant, dans ces deux positions, sur le deuxième appui 14b, à l'endroit d'une zone de pivotement 10.

Le support 2 comprend, à l'endroit du socle 9, une plaque de récupération qui s'étend sous le gaufrier 3 et qui est adaptée à recevoir la pâte à gaufre tombant de ce dernier. Le support 2 comprend également un palier avant 10a qui est situé à l'opposé de la charnière 6, et un palier arrière 11 qui est situé du côté de la charnière 6, les deux paliers 10a,11 sont alignés selon l'axe de pivotement 7 et servent de support au gaufrier 3. Bien évidemment, les deux paliers 10a,11 sont situés suffisamment au dessus de la plaque de récupération 9 pour que le gaufrier 3 puisse pivoter librement autour de l'axe de pivotement 7.

Le gaufrier 3 comprend un pivot avant 12 qui est situé à l'opposé de la charnière 6 et qui est monté libre en rotation dans le palier avant 10a, et un pivot arrière 13 qui est situé du côté de la charnière 6 et qui est monté libre en rotation dans le palier arrière 11. Ainsi, les deux pivots 12,13 s'étendent le long de l'axe de pivotement 7 et forment l'arbre de rotation autour duquel pivote le gaufrier 3.

Le pivot arrière 13 est un cylindre qui est emprisonné dans le palier arrière 11 formé par un anneau solidarisé à la plaque de récupération par deux bras qui peuvent former ensemble le premier appui vertical 14a. De ce fait, la seule liberté de mouvement du pivot arrière 13 dans le palier arrière 11 est sa rotation autour de l'axe de pivotement 7.

Le pivot avant 12 est solidaire du panneau inférieur 5 et comprend un logement 15 qui est adapté à recevoir, quand les deux panneaux 4,5 sont en position fermée, un élément de verrouillage 16 qui est solidaire du panneau supérieur 4. Quand les deux panneaux 4,5 sont en position ouverte, l'élément de verrouillage 16 se trouve hors du logement 15, et quand les deux panneaux 4,5 sont en position fermée, l'élément de verrouillage 16 est situé dans le logement 15.

Le palier avant 10a comprend une ouverture 19 qui est disposée de façon à permettre le passage de l'élément de verrouillage 16 pour l'ouverture et la fermeture du gaufrier 3 quand le gaufrier 3 est dans sa position de manoeuvre. L'ouverture 19 s'étend sur moins d'un demi-tour de façon à emprisonner le pivot avant 12 et à empêcher l'ouverture des panneaux 4,5 quand le gaufrier 3 est dans sa position retournée.

Ainsi, le dispositif de verrouillage comporte un palier 10a ménagé sur ledit support 2 pour la réception du bras 18 du panneau inférieur 5, ce palier supportant en rotation le pivot 12 dont la fente 15 reçoit une partie (16) de ladite poignée unique 17.

On comprend bien que, quand le gaufrier 3 est dans sa position de manoeuvre, pendant le déplacement du panneau supérieur 4 par rapport au panneau inférieur 5, l'élément de verrouillage 16 traverse librement l'ouverture 19 avant de se loger dans le logement 15 (dans le sens de la fermeture) ou après avoir quitté le logement 15 (dans le sens de l'ouverture). On comprend aussi que dès que le pivot avant 12 a pivoté autour de l'axe de pivotement 7 d'un angle tel que l'élément de verrouillage 16 n'est plus intégralement au droit de l'ouverture 19, il ne peut sortir du logement 15 et le gaufrier 3 est verrouillé dans sa position fermée, et, en particulier, quand le gaufrier 3 est dans sa position retournée, l'élément de verrouillage 16 se trouve en butée contre la partie inférieure de la paroi interne du palier avant 10, ce qui empêche l'ouverture du gaufrier 3.

Par ailleurs, on comprend aussi que, pour éviter qu'il y ait un jeu entre les deux panneaux 4,5 quand le gaufrier 3 est fermé, il est préférable que la hauteur de l'élément de verrouillage 16 soit telle que, quand il est en butée dans le logement 15, il soit aussi en butée contre la surface intérieure du palier avant 10 (au jeu nécessaire pour pouvoir faire pivoter le pivot avant 12 dans le palier avant 10 près).

L'élément de verrouillage 16 est formé par une lame 16 qui s'étend perpendiculairement à l'axe 8 de la charnière 6 et selon l'axe de pivotement 7, et qui relie le panneau supérieur 4 à une poignée de préhension 17. Dans le présent mode de réalisation, le gaufrier ne comprend qu'une seule poignée de préhension 17 qui est utilisée aussi bien pour faire pivoter le gaufrier 3 autour de l'axe de pivotement 7 que pour ouvrir et fermer le panneau supérieur 4.

Dans le présent mode de réalisation, le pivot avant 12 est lié au panneau inférieur 5 par une lame de liaison 18 qui s'étend perpendiculairement à l'axe 8 de la charnière 6 et selon l'axe de pivotement 7. La lame de liaison 18 est légèrement décalée dans la direction définie par l'axe 8 de la charnière 6 par rapport à la lame 16 formant l'élément de verrouillage 16 de façon à permettre la fermeture des deux panneaux 4,5.

Le pivot avant 12 a la forme générale d'un cylindre et le logement 15 est formé par une fente 15 qui passe par le centre du pivot 12. La fente 15 s'étend selon l'axe de pivotement 7 et, quand le gaufrier 3 est dans sa position de manoeuvre, verticalement. Les dimensions de la fente 15 (dans le sens de la largeur, c'est à dire dans la direction de l'axe 8 de la charnière 6, et dans le sens de la hauteur, c'est à dire verticalement quand le gaufrier 3 est dans sa position de manoeuvre) correspondent à celles de la lame 16 (c'est à dire, respectivement, à la largeur et à la hauteur de celle-ci).

Dans le présent mode de réalisation, le palier avant 10a est formé par un anneau qui est solidarisé à la plaque de récupération par deux bras 14 (pouvant former le deuxième appui vertical 14b) et qui comprend une rainure 19 formant l'ouverture 19. La rainure 19 s'étend verticalement et selon l'axe de pivotement 7, et prolonge le logement 15 quand le gaufrier 3 est dans sa position de manoeuvre. Les dimensions de la rainure 19 dans le sens de la largeur sont légèrement supérieures à celles de la fente 15, de ce fait, il suffit d'imposer un léger pivotement du gaufrier pour le verrouiller en position fermée. Le diamètre interne de l'anneau 10 correspond au diamètre externe du pivot avant 12 (au jeu nécessaire pour permettre la rotation près).

Ainsi, l'appareil électroménager 1 comprend le support 2, le panneau inférieur 5 qui est monté pivotant par rapport au support 2 autour de l'axe de pivotement 7 et qui est emprisonné par rapport au support 2, et la panneau supérieur 4 qui monté rotatif par rapport au panneau inférieur 5 (quand le dispositif de verrouillage est dans une configuration permettant l'ouverture du dispositif 3) autour de l'axe 8 de la charnière et qui est monté pivotant par rapport au support 2 autour de l'axe de pivotement 7 (notamment quand le dispositif 3 est fermé).

De plus, afin d'aider à la fermeture du gaufrier 3, le palier avant 10a comprend une languette de serrage 20 qui fait saillie hors du pallier avant 10 selon l'axe de pivotement 7, en direction opposée à celle du gaufrier 3, et qui est disposée sous le pivot avant 12. La languette de serrage 20 est utilisée pour amener entièrement l'élément de verrouillage 16 dans le logement 15, ce qui peut être avantageux quand beaucoup de pâte à gaufre a été disposée entre les panneaux 4,5 ou quand le dispositif 3 est destiné à griller les croques messieurs (les croques messieurs sont toujours réalisés plus épais que la cavité des plaques de cuisson 22 correspondantes, la cuisson étant meilleure quand ils sont « pincés » par les plaques de cuisson 22).

Comme on peut le voir à la figure 4, le palier 10a s'étend sur au moins un demi-tour, l'essentiel étant qu'il est conformé de sorte que le pivot 12 y soit emprisonné et que l'élément de verrouillage 16 soit en butée contre sa surface interne quand le dispositif 3 est dans sa position retournée.

Bien évidemment, la présente invention n'est pas limitée au mode de réalisation qui vient d'être décrite, il serait par exemple possible d'avoir un dispositif avec un panneau central, le pivot et l'élément de verrouillage étant chacun porté par un panneau extérieur.

## Revendications

1. Appareil électroménager (1) comportant, d'une part, un support (2), et, d'autre part, un dispositif gaufrier (3) qui comprend un panneau supérieur (4) et un panneau inférieur (5) articulés entre eux par une charnière (6) entre une position ouverte et une position fermée,
le dispositif (3) étant monté pivotant sur le support (2) autour d'un axe de pivotement (7) qui est perpendiculaire à l'axe (8) de la charnière (6), entre au moins une position angulaire de manoeuvre dans laquelle l'axe (8) de la charnière. (6) est orienté horizontalement et le panneau supérieur (4) est au-dessus du panneau inférieur (5), et une seconde position angulaire retournée dans laquelle l'axe (8) de la charnière (6) est orienté horizontalement et le panneau supérieur (4) est au-dessous du panneau inférieur (5),
le panneau supérieur (4) portant un bras (16) qui s'étend à l'opposé de la charnière (6),
le panneau inférieur (5) portant un pivot (12) qui s'étend à l'opposé de la charnière (6), selon l'axe de pivotement (7), et qui est adapté à recevoir le bras (16) quand les deux panneaux (4,5) sont en position fermée, et
le support (2) portant un palier (10) qui est disposé à l'opposé de la charnière (6), dans l'axe de pivotement (7), dans lequel le pivot (12) est monté pivotant, et qui comprend une ouverture (19) disposée de façon à permettre le passage du bras (16) lors du mouvement relatif des deux panneaux (5,6) de l'une à l'autre de leurs positions ouverte et fermée quand le dispositif gaufrier (3) est dans sa position de manoeuvre, le diamètre interne du palier (10) correspondant au diamètre externe du pivot (12),
**Caractérisé en ce que** l'ouverture (19) s'étend sur moins d'un demi-tour de façon à emprisonner le pivot (12) dans le palier (10), et à emprisonner, quand le panneau supérieur (4) est dans sa position fermée et le dispositif gaufrier (3) est dans sa position retournée, le bras (16) dans un logement (15) qui est réalisé dans le pivot (12) et qui est adapté à recevoir le bras (16) quand les deux panneaux (4,5) sont en position fermée, de sorte que le bras (16) forme un élément de verrouillage (16) verrouillant le panneau supérieur (4) dans sa position fermée quand le dispositif gaufrier (3) est dans sa position retournée.

2. Appareil électroménager (1) selon la revendication 1, **caractérisé en ce que**, dans la direction perpendiculaire à la fois à l'axe (8) de la charnière (6) et à l'axe de pivotement (7), les dimensions du bras (16) et du logement (15) sont telles que le bras (16) est en butée dans le logement (15) et contre la surface interne du palier (10) quand le panneau supérieur (4) est dans sa position fermée et le dispositif gaufrier (3) est dans sa position retournée.

3. Appareil électroménager (1) selon la revendication 1 ou 2, **caractérisé en ce que**, dans la direction de l'axe (8) de la charnière (6), les dimensions du bras (16) et du logement (15) correspondent.

4. Appareil électroménager (1) selon l'une des revendications 1 à 3, **caractérisé en ce que**, dans la direction de l'axe (8) de la charnière (6) quand le dispositif gaufrier (3) est dans sa position de manoeuvre, les dimensions de l'ouverture (19) et du bras (16) correspondent.

5. Appareil électroménager (1) selon la revendication 1 à 4, **caractérisé en ce que** le palier (10) comprend une languette de serrage (20) faisant saillie hors du pallier (10a), selon l'axe de pivotement (7), en direction opposée à celle du dispositif (3), et disposée sous le pivot (12).

6. Appareil électroménager (1) selon l'une des revendications 1 à 5, **caractérisé en ce que** le pivot (12) est lié au panneau inférieur (5) par une lame de liaison (18) s'étendant perpendiculairement à l'axe (8) de la charnière (6) et selon l'axe de pivotement (7).

7. Appareil électroménager (1) selon l'une des revendications 1 à 6, **caractérisé en ce que** le dispositif gaufrier (3) comprend une unique poignée de préhension (17) située au bout du bras (16).

8. Appareil électroménager (1) selon l'une des revendications 1 à 7, **caractérisé en ce que** le dispositif gaufrier (3) comprend, du côté de la charnière (6), un deuxième pivot (13) emprisonné et monté pivotant dans un deuxième palier (11) solidaire du support (2).

## Claims

1. A household electrical appliance (1) comprising, on the one hand, a support (2) and, on the other hand, a waffle-iron device (3) which comprises an upper panel (4) and a lower panel (5) articulated in relation to one another by a hinge (6) to move between an open position and a closed position,
the device (3) being pivotably mounted on the support (2) about a pivot axis (7), which is perpendicular to the axis (8) of the hinge (6), between at least one working angular position in which the axis (8) of the hinge (6) is oriented horizontally, the upper panel (4) being above the lower panel (5), and a second angular upside-down position in which the axis (8) of the hinge (6) is oriented horizontally, the upper panel (4) being beneath the lower panel (5), the upper panel (4) bearing an arm (16) which extends opposite the hinge (6), the lower panel (5) bearing a pivot (12) which extends opposite the hinge (6), according to the pivot axis (7) and which is designed to receive the arm (16) when the two panels (4, 5) are in a closed position, and
the support (2) bearing a bearing (10), which is arranged opposite the hinge (6) in the pivot axis (7), in which the pivot (12) is mounted pivotably, and which comprises an opening (19) arranged so as to allow the passage of the arm (16) during the relative movement of the two panels (5, 6) to one another between their open and closed positions, when the waffle device (3) is in its working position, the internal diameter of the bearing (10) corresponding to the external diameter of the pivot (12),
**characterised in that** the opening (19) extends over less than half a turn so as to hold the pivot (12) in the bearing (10), and, when the upper panel (4) is in its closed position and the waffle device (3) is in its upside-down position, to hold the arm (16) in a housing (15) which is formed in the pivot (12) and which is designed to receive the arm (16) when the two panels (4, 5) are in a closed position, such that the arm (16) forms a locking element (16) locking the upper panel (4) in its closed position when the waffle device (3) is in its upside position.

2. The household electrical appliance (1) according to claim 1, **characterised in that** in the direction perpendicular both to the axis (8) of the hinge (6) and to the pivot axis (7), the dimensions of the arm (16) and the housing (15) are such that the arm (16) is in abutment in the housing (15) and against the internal surface of the bearing (10) when the upper panel (4) is in its closed position and the waffle device (3) is in its upside-down position.

3. The household electrical appliance (1) according to claim 1 or 2,
**characterised in that** in the direction of the axis (8) of the hinge (6), the dimensions of the arm (16) and the housing (15) correspond with one another.

4. The household electrical appliance (1) according to one of claims 1 to 3,
**characterised in that** in the direction of the axis (8) of the hinge (6), when the waffle device (3) is in its working position, the dimensions of the opening (19) and the arm (16) correspond with one another.

5. The household electrical appliance (1) according to claim 1 to 4,
**characterised in that** the bearing (10) comprises a clamping tongue (20) projecting from the bearing (10a), along the pivot axis (7), in a direction opposite to the device (3), and disposed beneath the pivot (12).

6. The household electrical appliance (1) according to one of claims 1 to 5,
**characterised in that** the pivot (12) is connected to the lower panel (5) by a connecting blade (18) extending perpendicularly to the axis (8) of the hinge (6) and according to the pivot axis (7).

7. The household electrical appliance (1) according to one of claims 1 to 6,
**characterised in that** the waffle device (3) comprises a single gripping handle (17) located at the end of the arm (16).

8. The household electrical appliance (1) according to one of claims 1 to 7,
**characterised in that** the waffle device (3) comprises, from the side of the hinge (6), a second pivot (13) held and mounted pivotably in a second bearing (11) secured to the support (2).

## Patentansprüche

1. Elektrisches Haushaltsgerät (1) mit einerseits einem Träger (2) und andererseits einem Waffeleisen (3), das eine obere Platte (4) und eine untere Platte (5) umfasst, die durch ein Gelenk (6) zueinander zwischen einer Öffnungsposition und einer Schließposition gelenkig bewegbar angebracht sind,
wobei die Einrichtung (3) auf dem Träger (2) schwenkbar um eine Schwenkachse (7) angebracht ist, die senkrecht zur Achse (8) des Gelenks (6) verläuft, zwischen wenigstens einer Winkel-Handhabungsposition, in welcher die Achse (8) des Gelenks (6) horizontal ausgerichtet ist und sich die obere Platte (4) oberhalb der unteren Platte (5) befindet, und einer umgedrehten zweiten Winkelposition, in welcher die Achse (8) des Gelenks (6) horizontal ausgerichtet ist und sich die obere Platte (4) unter der unteren Platte (5) befindet,
wobei die obere Platte (4) einen Arm (16) trägt, der sich auf der gegenüberliegenden Seite des Gelenks (6) erstreckt,
wobei die untere Platte (5) einen Drehzapfen (12) trägt, der sich an der gegenüberliegenden Seite des Gelenks (6) entlang der Schwenkachse (7) erstreckt und der so ausgebildet ist, dass dieser den Arm (16) aufnimmt, wenn sich die zwei Platten (4, 5) in der Schließposition befinden, und
wobei der Träger (2) einen Absatz (10) trägt, der an der gegenüberliegenden Seite des Gelenks (6) in der Schwenkachse (7) angeordnet ist, in welchem der Drehzapfen (12) schwenkend angebracht ist und der eine Öffnung (19) aufweist, die derart angeordnet ist, dass sie den Durchgang des Armes (16) bei der Relativbewegung der zwei Platten (5, 6) zueinander zu ihrer Öffnungs- und Schließposition ermöglicht, wenn sich die Waffeleinrichtung (3) in ihrer Handhabungsposition befindet, wobei der Innendurchmesser des Absatzes (10) dem Außendurchmesser des Drehzapfens (12) entspricht,
**dadurch gekennzeichnet, dass** sich die Öffnung (19) über wenigstens eine halbe Umdrehung erstreckt, um so den Drehzapfen (12) in dem Absatz (10) gefangen zu halten und, wenn sich die obere Platte (4) in ihrer Schließposition befindet und sich die Waffereinrichtung (3) in ihrer umgedrehten Position befindet, den Arm (16) in einer Aufnahme (15) gefangen zu halten, die in dem Drehzapfens (12) ausgebildet ist und die so ausgelegt, dass sie den Arm (16) aufnimmt, wenn sich die zwei Platten (4, 5) in einer Schließposition befinden, derart, dass der Arm (16) ein Verriegelungselement (16) bildet, welches die obere Platte (4) in ihrer Schließposition verriegelt, wenn sich die Waffeleinrichtung (3) in ihrer umgedrehten Position befindet.

2. Elektrohaushaltsgerät (1) nach Anspruch 1, **dadurch gekennzeichnet, dass** in der senkrechten Richtung zur Achse (8) des Gelenks (6) und der Schwenkachse (7) die Abmessungen des Armes (16) und der Aufnahme (15) derart sind, dass der Arm (16) in der Aufnahme (15) und an der Innenfläche des Absatzes (10) anliegt, wenn sich die obere Platte (4) in ihrer Schließposition befindet und sich die Waffeleinrichtung (3) in ihrer umgedrehten Position befindet.

3. Elektrohaushaltsgerät (1) nach Anspruch 1 oder 2, **dadurch gekennzeichnet, dass** in der Richtung der Achse (8) des Gelenks (6) die Abmessungen des Armes (16) und der Aufnahme (15) korrespondieren.

4. Elektrohaushaltsgerät (1) nach einem der Ansprüche 1 bis 3, **dadurch gekennzeichnet, dass** in Richtung der Achse (8) des Gelenks (6), wenn sich die Waffeleinrichtung (3) in ihrer Handhabungsposition befindet, die Abmessungen der Öffnung (19) und des Armes (16) korrespondieren.

5. Elektrohaushaltsgerät (1) nach Anspruch 1 bis 4, **dadurch gekennzeichnet, dass** der Absatz (10) eine Schließzunge (20) umfasst, die über den Absatz (10a) entlang der Schwenkachse (7) in einer Richtung entgegengesetzt zu derjenigen der Einrichtung (3) vorsteht und unter dem Drehzapfen (12) angeordnet ist.

6. Elektrohaushaltsgerät (1) nach einem der Ansprüche 1 bis 5, **dadurch gekennzeichnet, dass** der Drehzapfen (12) mit der unteren Platte (5) durch einen Verbindungsstreifen (18) verbunden ist, der sich senkrecht zur Achse (8) des Gelenks (6) entlang der Schwenkachse (7) erstreckt.

7. Elektrohaushaltsgerät (1) nach einem der Ansprüche 1 bis 6, **dadurch gekennzeichnet, dass** die Waffeleinrichtung (3) einen einzigen Vorspannknopf (17) umfasst, der am Ende des Armes (16) angeordnet ist.

8. Elektrohaushaltsgerät (1) nach einem der Ansprüche 1 bis 7, **dadurch gekennzeichnet, dass** die Waffeleinrichtung (3) an der Seite des Gelenks (6) einen zweiten Drehzapfens (13) umfasst, der in einem fest mit dem Träger (2) verbunden zweiten Absatz (11) gefangen und schwenkend angebracht ist.
